# EUROPÄISCHE PATENTSCHRIFT

(11) **EP 4 198 372 B1**
(45) Veröffentlichungstag und Bekanntmachung des Hinweises auf die Patenterteilung: **21.08.2024**
(21) Anmeldenummer: 22212753.2
(22) Anmeldetag: 12.12.2022
(51) Int. Cl.: F16L 55/033, F16L 55/035, F16L 57/06, H02G 3/32

(54) **ZU EINEM RING VERSCHLIESSBARER KUNSTSTOFFSTRANG FÜR KABEL ODER LEITUNGEN**
PLASTIC STRAND FOR CABLES OR LINES, WHICH CAN BE CLOSED TO FORM A RING
BRIN EN MATIÈRE PLASTIQUE POUVANT ÊTRE FERMÉ EN BAGUE POUR CÂBLES OU CONDUITES

(30) Priorität: 15.12.2021 DE 102021133241
(43) Veröffentlichungstag der Anmeldung: 21.06.2023
(73) Patentinhaber: Meteor GmbH, 31167 Bockenem (DE)
(72) Erfinder: BORMANN, Josef, 31177 Harsum (DE); SCHUBERT, Tobias, 31191 Algermissen (DE)
(74) Vertreter: Callies, Rainer Michael

(56) Entgegenhaltungen:
- EP-A1- 1 741 579
- EP-B1- 2 878 874
- DE-A1- 102016 116 247
- US-B1- 6 601 802

## Beschreibung

Die Erfindung bezieht sich auf einen Kunststoffstrang mit einem ersten und zweiten Ende, die so miteinander verbunden werden können, dass ein Ring gebildet ist. Der Ring ist zum Umschließen von einem oder mehreren Kabeln bzw. einer oder mehreren Leitungen vorgesehen. Der Ring dient dazu, Geräusche zu vermeiden, die dadurch entstehen können, dass Kabel oder Leitungen vibrieren und bei Kontakt mit einem benachbarten Bauteil Geräusche erzeugen. Ferner kann der Ring auch dazu dienen, mehrere Kabel oder Leitungen zu bündeln.

Aus der US-A-3 161 210 ist ein Schlauch aus Gummi bekannt, der über eine Rohr- oder Schlauchleitung gezogen werden kann und eine Vielzahl von sich in Längsrichtung erstreckenden Rippen aufweist. Der Schlauch dient dazu, die Leitung gegen Beschädigungen zu schützen und gegen Schwingungen zu isolieren. Der Schlauch wird aus einem Strang gebildet, der mittels der Rippen zu dem Schlauch verschlossen wird.

Auch aus der EP 1 099 899 A2 ist ein Schlauch zur Halterung von Rohrleitungen bekannt. Dieser Schlauch besteht aus einem Verbundwerkstoff aus zumindest zwei Elastomeren, und er wird aus einem Strang dadurch gebildet, dass ein Widerhaken an einem Ende des Strangs in eine hinterschnittene Ausnehmung an einem anderen Ende des Strangs gedrückt wird. Das Elastomer der Bereiche der Ausnehmung und des Widerhakens ist härter als das übrige Elastomer des Schlauches. Im Inneren weist der Schlauch eine Vielzahl von Rippen auf.

Eine Weiterbildung eines solchen Schlauches bzw. elastomeren Leitungsdämpfers ist in der EP 2 878 874 B1 beschrieben. Während der Leitungsdämpfer gemäß der EP 1 099 899 B1 aus elatomerem Vollmaterial hergestellt ist, weist der Leitungsdämpfer gemäß der EP 2 878 874 B1 einen Umfangsabschnitt aus einem ersten porösen Elastomermaterial auf und die Rippen bzw. Zacken sind aus einem zweiten porösen Elastomermaterial gebildet. Dabei ist die Porengröße des Elastomermaterials in den Zacken größer als die Porengröße in dem Umfangsabschnitt. Der Leitungsdämpfer weist einen aus einheitlichem Vollmaterial hergestellten Verschlussabschnitt auf, der eine Aufnahmeöffnung und einen korrespondierenden Widerhaken besitzt. Dadurch wird eine erhöhte Festigkeit des Verschlussabschnittes erreicht.

Ein elastomerer Leitungsdämpfer zum Umschließen einer Rohrleitung ist auch aus der US 2002/0070316 A1 bekannt. Dieser Leitungsdämpfer weist eine äußere, thermoplastische Schicht und eine innere, geschäumte Schicht auf. Der Leitungsdämpfer wird aus einem Strang in die Form einer Rohrklemme geführt, indem eine durch die thermoplastische Schicht begrenzte Vorwölbung in eine ebenfalls durch diese Schicht begrenzte Ausnehmung gedrückt wird.

Aus der EP 1 106 900 A1 ist eine vibrationsisolierende Rohrschellenanordnung bekannt, die drei Schichten aufweist. Dabei ist die mittlere Schicht aus einem elastischen Material, während die beiden äußeren Schichten aus einem festeren Material sind.

Die DE 10 2016 116 231 A1 und die DE 10 2016 238A1 offenbaren jeweils einen elastischen Abstandshalter zum Dämpfen von Vibrationen und zur Abstandshaltung einer Leitung, insbesondere eines Fahrzeugs, wobei der Abstandshalter an einem Fahrzeugbauteil mittels eines Befestigungsstifts bzw. eines Befestigungsfußes mit elastischen Haltelippen befestigt werden kann.

Weiterhin ist aus der US 5 013 166 A eine Halterung für einen Torsionsstab bekannt, die unterschiedlich elastische Schichten aufweist.

Der Erfindung liegt die Aufgabe zugrunde, einen Kunststoffstrang der eingangs genannten Art zur Verfügung zu stellen, der als geschlossener Ring sowohl auf einer Innenseite als auch auf einer Außenseite gute Geräuschminderungseigenschaften hat und ferner eine hohe Festigkeit sowie eine gute Stabilität der Verbindung der beiden Strangenden aufweist.

Diese Aufgabe wird durch die Merkmale des Anspruchs 1 gelöst. Zusätzlich zu den oben genannten Merkmalen weist der Kunststoffstrang über seine Dicke bzw. im Querschnitt eine erste, innere Elastomerschicht und darüberliegend eine zweite Elastomerschicht auf. Das Elastomer der ersten Schicht ist weicher als das Elastomer der zweiten Schicht. Die innere Elastomerschicht besitzt auf einer Innenseite, die bei der Bildung eines Ringes nach innen weist, Rippen oder Noppen auf. Ferner besitzt der Strang über seine Dicke eine dritte, äußere Elastomerschicht deren Elastomer ebenfalls weicher ist als das Elastomer der zweiten Schicht.

Der Strang hat an dem ersten Ende einen ersten, elastomeren Verbindungsabschnitt und an dem zweiten Ende einen zweiten, elastomeren Verbindungsabschnitt. Der erste Verbindungsabschnitt besitzt eine Aufnahmeöffnung, und der zweite Verbindungsabschnitt einen Steckbereich, der in die Aufnahmeöffnung eingeführt werden kann. Durch einen solchen Eingriff des Steckbereichs mit der Aufnahmeöffnung wird der Strang zu einem Ring geformt. Eine Innenfläche der Aufnahmeöffnung weist zumindest teilweise eine Elastomerbeschichtung auf, die härter ist als der restliche Teil des ersten Verbindungsabschnitts. Eine Außenfläche des Steckbereichs weist ebenfalls zumindest teilweise eine Elastomerbeschichtung auf, die härter ist als der restliche Teil des zweiten Verbindungsabschnitts.

Dadurch, dass der Kunststoffstrang und somit der aus diesem gebildete Ring zumindest drei Elastomerschichten aufweist, wobei eine innere und eine äußere Schicht aus einem weicheren Elastomer hergestellt sind als eine dazwischen liegende Elastomerschicht, ist zum einen erreicht, dass eine effektive Vermeidung von Geräuschen stattfindet, wenn der Ring ein oder mehrere Kabel oder zumindest eine Leitung umgibt und dabei vibriert, wie dies insbesondere bei Verwendung in einem Kraftfahrzeug der Fall sein kann. Zum anderen ist aber auch eine hohe Festigkeit des Ringes aufgrund des härteren Elastomers der zweiten Elastomerschicht gewährleistet. Dadurch, dass zumindest ein Teil der Innenfläche der Aufnahmeöffnung und zumindest ein Teil der Außenfläche des Steckbereichs mit einer Elastomerbeschichtung versehen sind, die härter ist, als der jeweils restliche Teil des Verbindungsabschnitts, weist der Verschluss des Ringes, der dadurch gegeben ist, dass der Steckbereich und die Ausnahmeöffnung miteinander in Eingriff sind, eine hohe Stabilität bzw. Sicherheit auf. Dies ergibt sich aus dem relativ hohen Härtegrad der beiden Elastomerbeschichtungen und daraus, dass somit beim Verbinden der beiden Verbindungsabschnitte ein gewisser Widerstand überwunden werden muss, so dass von einem Verrasten gesprochen werden kann. Der Verschluss kann auch als Clip-Verschluss bezeichnet werden, und die beiden Verbindungsabschnitte als Clip-Abschnitte.

Die Weichheit der ersten und der dritten Elastomerschicht wirken sich insbesondere günstig bei elektrisch angetriebenen Kraftfahrzeugen aus, da diese aufgrund ihres Antriebs im Vergleich zu einem Fahrzeug mit einem Verbrennungsmotor einen relativ geringen Geräuschpegel erzeugen.

Vorzugsweise sind die Aufnahmeöffnung und der Steckbereich, insbesondere die beiden Elastomerbeschichtungen, so geartet, dass beim Einführen des Steckbereichs in die Aufnahmeöffnung ein hörbares Geräusch entsteht. Dieses stellt vorteilhafterweise eine akustische Rückmeldung dahingehend dar, dass beim Zusammenfügen der beiden Enden des Kunststoffstrangs ein Verrasten des Steckbereichs mit der Aufnahmeöffnung stattgefunden hat.

Die erfindungsgemäßen relativen Unterschiede in der Weichheit bzw. Härte können insbesondere nach Shore-A gemessen werden bzw. gegeben sein.

Vorzugsweise ist die Elastomerbeschichtung der Aufnahmeöffnung aus thermoplastischem Vulkanisat (TPV) hergestellt. Gleiches gilt für die Elastomerbeschichtung des Steckbereichs. Die mindere Deformationsrate von thermoplastischem Vulkanisat sorgt dafür, dass beim Zusammenführen von Steckbereich und Aufnahmeöffnung ein erhöhter Widerstand zu überwinden ist. Dies sorgt für eine sichere Verbindung und die Erzeugung eines akustischen Signals am Ende des Verschließvorgangs. Möglich sind als Material für die Elastomerbeschichtungen aber auch andere thermoplastische Elastomere.

Die Dicke der Elastomerbeschichtungen kann insbesondere zwischen 0,15 bis 0,25 mm liegen, vorzugsweise beträgt sie ca. 0,2 mm. Eine solche Dicke sorgt für ein günstiges Maß an Flexibilität der Beschichtungen.

Vorzugsweise sind die innere und die äußere Elastomerschicht aus Porengummi hergestellt. Durch die poröse bzw. zellige Struktur dieses Gummis ist eine Weichheit gegeben, die eine Vibrationsdämpfung fördern und Klappergeräusche effektiv verhindern kann. Bei dem Porengummi kann es sich insbesondere um Moosgummi handeln. Vorteilhaft ist auch die Verwendung von Schaumgummi. Vorzugsweise sind die innere und die äußere Elastomerschicht aus demselben Material hergestellt.

Die zweite Elastomerschicht, die zwischen der ersten bzw. inneren und der dritten bzw. äußeren Elastomerschicht liegt, ist vorzugsweise aus Weichgummi hergestellt. Das Weichgummi besitzt vorzugsweise eine Härte von 60 bis 90 Shore-A. Die Härte kann insbesondere 80 bis 90 Shore-A betragen. Auf diese Weise wird eine hohe Festigkeit des Kunststoffstrangs und des daraus gebildeten Ringes erreicht.

Es ist auch vorteilhaft, wenn die beiden Verbindungsabschnitte - abgesehen von den beiden Elastomerbeschichtungen - aus demselben Material hergestellt sind wie die zweite Elastomerschicht. Dies vereinfacht die Herstellung des Kunststoffstrangs und bewirkt auch eine gute Festigkeit der beiden Verbindungsabschnitte.

Es ist vorteilhaft, wenn die Aufnahmeöffnung einen hinterschnittenen Rand aufweist und es sich bei dem Steckbereich um einen dazu komplementären Widerhaken handelt. Dabei besitzen die Aufnahmeöffnung und der Steckbereich jeweils einen Halsbereich und einen Dreiecksbereich, wobei die Halsbereiche und die Dreiecksbereiche jeweils zueinander komplementär sind. Auf diese Weise wird eine sichere Verbindung der beiden Enden des Kunststoffstrangs ermöglicht. Eine solche Verbindung ist gegenüber einer Zugbeanspruchung besonders widerstandsfähig. Bei einer solchen Ausgestaltung der Verbindungsabschnitte befindet sich die Elastomerbeschichtung des ersten Verbindungsabschnitts vorzugsweise in dem Halsbereich der Aufnahmeöffnung und die Elastomerbeschichtung des zweiten Verbindungsabschnitts in dem Dreiecksbereich des Widerhakens. Dies bedeutet, dass beim Verknüpfen der beiden Verbindungsabschnitte, die Elastomerschicht des Widerhakens entlang der Elastomerschicht der Aufnahmeöffnung geführt wird, wodurch ein erhöhter Widerstand überwunden werden muss, bis der Dreiecksbereich des Widerhakens sich vollständig in dem Dreiecksbereich der Aufnahmeöffnung befindet, also eine Verrastung stattfindet. Zum Zeitpunkt der Verrastung kann wie oben beschrieben ein Geräusch entstehen, das als akustische Rückmeldung für ein erfolgreiches Verrasten genutzt werden kann.

Insbesondere kann der Kunststoffstrang genau drei Elastomerschichten aufweisen, so dass es sich bei der zweiten Elastomerschicht um eine mittlere Schicht handelt, die mit einer Innenseite an die erste Elastomerschicht und mit einer Außenseite an die dritte Elastomerschicht angrenzt. Auch die äußere Elastomerschicht weist vorzugsweise auf einer Außenseite Rippen oder Noppen auf. Auf diese Weise wird die Fähigkeit einer Verformung des äußeren Umfangs eines Ringes bei Druckausübung erhöht, was zu besonders guten Dämpfungseigenschaften beiträgt.

Der Kunststoffstrang kann ein Befestigungselement aufweisen, das dazu vorgesehen ist, einen aus ihm gebildeten Ring an einem Gegenstand zu befestigen. Dies kann insbesondere nützlich sein, wenn Kabel oder Leitungen mittels des Ringes befestigt werden sollen.

Der Kunststoffstrang kann auch farbig ausgestaltet sein, insbesondere auch einen Farbstreifen aufweisen, wodurch auf eine bestimmte vorgesehene Verwendung hinwiesen werden kann.

Der aus dem Kunststoffstrang gebildete Ring kann in Längsrichtung auch eine relativ große Ausdehnung aufweisen, von beispielsweise bis zu 50 cm, so dass man dann auch von einem Schlauch sprechen könnte.

Vorzugsweise besitzen die erste und die dritte Elastomerschicht eine Härte von 15 bis 40 Shore-A, wobei die beiden Elastomerschichten unterschiedlich hart sein können.

Im Folgenden wird die Erfindung anhand zweier Ausführungsbeispiele näher erläutert, wobei auf die Figuren Bezug genommen wird. Es zeigen:
Fig. 1 eine perspektivische, seitliche Ansicht auf einen erfindungsgemäßen Kunststoffstrang,
Fig. 2 eine seitliche Draufsicht auf den Kunststoffstrang der Fig. 1,
Fig. 3 eine perspektivische Ansicht eines aus dem Kunststoffstrang der Fig. 1 gebildeten Ringes,
Fig. 4 eine seitliche Draufsicht auf den Ring der Fig. 3,
Fig. 5 eine perspektivische seitliche Ansicht auf einen anderen, erfindungsgemäßen Kunststoffstrang, der ein Element zur Befestigung an einem Gegenstand aufweist,
Fig. 6 eine seitliche Draufsicht auf den Kunststoffstrang der Fig. 5,
Fig. 7 eine perspektivische Ansicht eines aus dem Kunststoffstrang der Fig. 5 gebildeten Ringes,
Fig. 8 eine seitliche Draufsicht auf den Ring der Fig. 7.

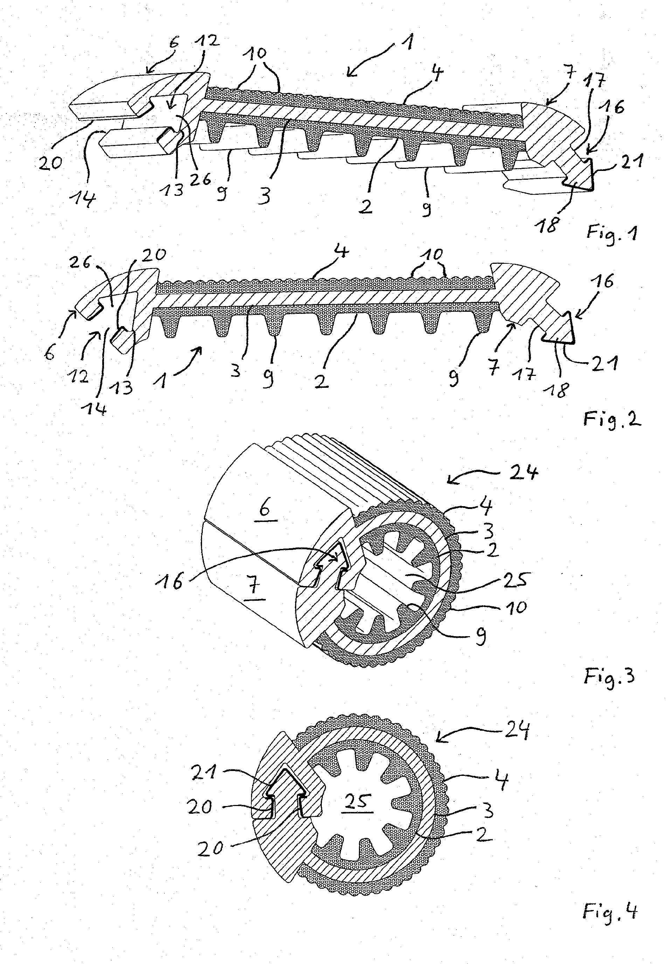

Der Kunststoffstrang der Fig. 1 ist mit dem Bezugszeichen 1 bezeichnet und weist eine erste, innere Elastomerschicht 2, eine zweite, darüberliegende Elastomerschicht 3 und eine dritte, äußere Elastomerschicht 4 auf.

An einem ersten Ende hat der Kunststoffstrang 1 einen ersten, elastomeren Verbindungsabschnitt 6 und an einem zweiten Ende einen zweiten Verbindungsabschnitt 7.

Die innere Elastomerschicht 2 weist eine Vielzahl von zackenartigen Rippen 9 auf. Die äußere Elastomerschicht 4 besitzt auf einer Außenseite ebenfalls eine Reihe von Rippen 10.

Der erste Verbindungsabschnitt 6 besitzt eine Aufnahmeöffnung 12, die einen hinterschnittenen Rand 13 und einen Halsbereich 14 aufweist. Der zweite Verbindungsabschnitt 7 besitzt einen Steckbereich in Form eines Widerhakens 16, der komplementär zu der Aufnahmeöffnung 12 geformt ist und ebenfalls einen Halsbereich 17 aufweist. Ferner besitzt der Widerhaken 16 einen Dreiecksbereich 18.

In dem Halsbereich 14 der Aufnahmeöffnung 12 ist eine Elastomerbeschichtung 20 aus thermoplastischem Vulkanisat angeordnet, die eine Innenfläche des Halsbereiches 14 bildet. Ferner weist der Widerhaken 16 in seinem Dreiecksbereich 18 eine Elastomerbeschichtung 21 aus thermoplastischem Vulkanisat auf, die eine Außenfläche des Dreiecksbereichs 18 bildet.

Von den Elastomerbeschichtungen 20 und 21 abgesehen, sind die beiden Verbindungsabschnitte 6 und 7 aus demselben Elastomermaterial hergestellt wie die zweite bzw. mittlere Elastomerschicht 3. Ferner ist die innere Elastomerschicht 2 aus demselben Elastomermaterial hergestellt wie die äußere Elastomerschicht 4. Der Klarheit halber sei auch darauf hingewiesen, dass die Rippen 9 aus demselben Material bestehen wie die restliche innere Elastomerschicht 2. Bei dem Elastomer der inneren Elastomerschicht 2 und der äußeren Elastomerschicht 4 handelt es sich um Moosgummi, während es sich bei dem Elastomer der mittleren Elastomerschicht 3 um Weichgummi, das eine Härte von 80 bis 90 Shore-A aufweist, handelt, wobei insbesondere auch eine Härte des Weichgummis von 60 bis 90 Shore-A möglich wäre. Das Moosgummi kann z. B. eine Härte von 15 bis 40 Shore-A aufweisen.

Der durch Verbinden der beiden Verbindungsabschnitte 6 und 7 entstandene Ring der Fig. 3 ist mit dem Bezugszeichen 24 bezeichnet. Der Ring 24 besitzt einen Hohlraum 25, in dem Kabel oder eine bzw. mehrere Leitungen (nicht gezeigt) angeordnet sein können. Aufgrund der Weichheit des Moosgummis der inneren Elastomerschicht 2 und deren Ausgestaltung mit Rippen 9 ist eine flexible Anpassung des Hohlraums 25 an die Kabel bzw. Leitungen durch eine entsprechende Deformation der Rippen 9 möglich, so dass Vibrationen und damit verbundene Geräusche weitestgehend verhindert sind. Entsprechendes gilt auch für die äußere Elastomerschicht 4, wenn diese in Kontakt mit einem anderen Bauteil gelangt.

Zum Verbinden der beiden Enden des Kunststoffstrangs 1 muss der Widerhaken 16 mit seiner Elastomerbeschichtung 21 entlang der Elastomerbeschichtung 20 geführt werden, was aufgrund der gegenüber dem Weichgummi erhöhten Härte des thermoplastischen Vulkanisats der beiden Beschichtungen 20, 21 gegen einen relativ hohen Widerstand geschieht. Infolge dieses erhöhten Widerstandes entsteht dann, wenn der Dreiecksbereich 18 vollständig in einen komplementären Dreiecksbereich 26 der Aufnahmeöffnung 12 gelangt ist, ein Geräusch, das als akustische Rückmeldung für das Verrasten der Widerhakens 16 in der Aufnahmeöffnung 12 dienen kann.

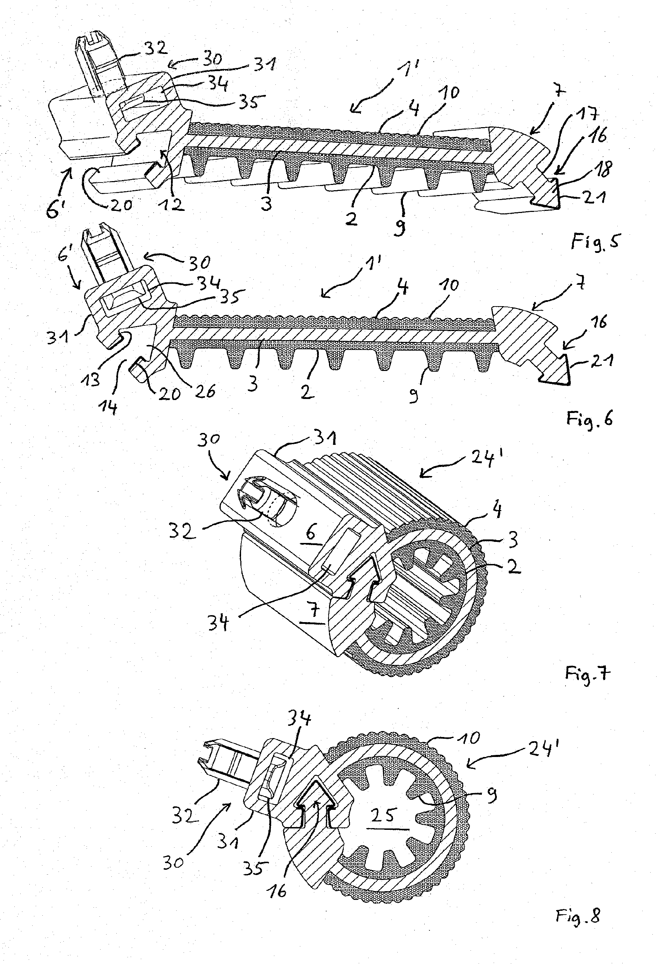

In den Figuren sind gleiche Merkmale mit gleichen Bezugszeichen bezeichnet. Der Kunststoffstrang 1' der Fig. 5 unterscheidet sich von dem Kunststoffstrang 1 der Fig. 1 dadurch, dass er zusätzlich ein Befestigungselement 30 aufweist. Dieses besteht aus einem Sockel 31, der integraler Bestandteil eines ersten Verbindungsabschnitts 6' ist, und einem Stift 32. Der Sockel 31 weist einen Hohlraum 34 auf, in dem ein Kopf 35 des Stiftes 32 gehalten ist. Während der Sockel 31 aus demselben Elastomermaterial hergestellt ist wie der restliche Teil des ersten Verbindungsabschnitts 6` (abgesehen von der Elastomerbeschichtung 20), ist der Stift 32 aus einem thermoplastischen Material hergestellt. Zur Befestigung des aus dem Kunststoffstrang 1' durch Verknüpfen der beiden Verbindungsabschnitte 6' und 7 hergestellten Ringes 24' (siehe Fig. 7 und 8) an einem Bauteil wird der Stift 32 in eine korrespondierende Öffnung, die beispielsweise durch eine Buchse (nicht gezeigt) gegeben sein kann, gedrückt. Eine solche Befestigungsmöglichkeit kann insbesondere bei einem Rohbau, in einem Gehäuse oder im Fahrzeugbau gewünscht sein.

Die weiteren Merkmale des Kunststoffstrangs 1' sind dieselben wie bei dem Kunststoffstrang 1 der Fig. 1 und 2.

### Bezugszeichenliste:

- 1, 1': Kunststoffstrang
- 2: erste Elastomerschicht
- 3: zweite Elastomerschicht
- 4: dritte Elastomerschicht
- 6, 6': erster Verbindungsabschnitt
- 7: zweiter Verbindungsabschnitt
- 9: Rippen
- 10: Rippen
- 12: Aufnahmeöffnung
- 13: hinterschnittener Rand von 12
- 14: Halsbereich von 12
- 16: Widerhaken
- 17: Halsbereich von 16
- 18: Dreiecksbereich von 16
- 20: Elastomerbeschichtung von 12
- 21: Elastomerbeschichtung von 16
- 24, 24': Ring
- 25: Hohlraum
- 26: Dreiecksbereich von 12
- 30: Befestigungselement
- 31: Sockel
- 32: Stift
- 34: Hohlraum
- 35: Kopf von 32

## Patentansprüche

1. Kunststoffstrang (1) mit einem ersten und einem zweiten Ende, wobei die beiden Enden so miteinander verbindbar sind, dass ein zum Umschließen von Kabeln oder Leitungen dienender Ring (24) gebildet ist,
wobei der Strang (1) über seine Dicke eine erste, innere Elastomerschicht (2) und eine zweite, darüberliegende Elastomerschicht (3) aufweist, wobei das Elastomer der ersten Elastomerschicht (2) weicher ist als das Elastomer der zweiten Elastomerschicht (3),
wobei die erste Elastomerschicht (2) auf einer Innenseite Rippen (9) oder Noppen aufweist,
wobei der Strang (1) über seine Dicke eine dritte, äußere Elastomerschicht (4) aufweist, deren Elastomer weicher ist als das Elastomer der zweiten Elastomerschicht (3),
wobei der Strang (1) zum Verbinden der Enden an dem ersten Ende einen ersten, elastomeren Verbindungsabschnitt (6), der eine Aufnahmeöffnung (12) besitzt, und an dem zweiten Ende einen zweiten, elastomeren Verbindungsabschnitt (7), der einen in die Aufnahmeöffnung (12) einführbaren Steckbereich (16) besitzt, aufweist
und wobei eine Innenfläche der Aufnahmeöffnung (12) zumindest teilweise durch eine verglichen mit dem restlichen ersten Verbindungsabschnitt (6) härtere Elastomerbeschichtung (20) gegeben ist und eine Außenfläche des Steckbereichs (16) zumindest teilweise durch eine verglichen mit dem restlichen zweiten Verbindungsabschnitt (7) härtere Elastomerbeschichtung (21) gegeben ist.

2. Strang (1) nach Anspruch 1,
**dadurch gekennzeichnet, dass** die Aufnahmeöffnung (12) und der Steckbereich (16) so beschaffen sind, dass beim Einführen des Steckbereichs (16) des zweiten Verbindungsabschnitts (7) in die Aufnahmeöffnung (12) des ersten Verbindungsabschnitts (6) ein hörbares Geräusch entsteht.

3. Strang (1) nach Anspruch 1 oder 2,
**dadurch gekennzeichnet, dass** die Elastomerbeschichtung (20) der Aufnahmeöffnung (12) und/oder die Elastomerbeschichtung (21) des Steckbereichs (16) aus thermoplastischem Vulkanisat besteht (TPV).

4. Strang (1) nach einem der vorhergehenden Ansprüche,
**dadurch gekennzeichnet, dass** die Elastomerbeschichtungen (20, 21) des ersten und des zweiten Verbindungsabschnitts (6, 7) eine Dicke von 0,15 bis 0,25 mm, vorzugsweise von 0,2 mm, aufweisen.

5. Strang (1) nach einem der vorhergehenden Ansprüche,
**dadurch gekennzeichnet, dass** die erste Elastomerschicht (2) und die dritte Elastomerschicht (4) aus Porengummi, vorzugsweise aus Moosgummi oder Schaumgummi, hergestellt sind.

6. Strang (1) nach einem der vorhergehenden Ansprüche,
**dadurch gekennzeichnet, dass** die erste Elastomerschicht (2) und die dritte Elastomerschicht (4) aus demselben Material hergestellt sind.

7. Strang (1) nach einem der vorhergehenden Ansprüche,
**dadurch gekennzeichnet, dass** die zweite Elastomerschicht (3) aus Weichgummi, vorzugsweise mit einer Härte von 60-90 Shore-A, hergestellt ist.

8. Strang (1) nach einem der vorhergehenden Ansprüche,
**dadurch gekennzeichnet, dass** die zweite Elastomerschicht (3) und die beiden Verbindungsabschnitte (6, 7), abgesehen von den beiden Elastomerbeschichtungen (20, 21), aus demselben Material hergestellt sind.

9. Strang (1) nach einem der vorhergehenden Ansprüche,
**dadurch gekennzeichnet, dass** die Aufnahmeöffnung (12) einen hinterschnittenen Rand (13) aufweist und der Steckbereich ein dazu komplementärer Widerhaken (16) ist, wobei die Aufnahmeöffnung (12) und der Widerhaken (16) jeweils zueinander komplementäre Halsbereiche (14, 17) und Dreiecksbereiche (26, 18) haben.

10. Strang (1) nach Anspruch 9,
**dadurch gekennzeichnet, dass** die Elastomerbeschichtung (20) des ersten Verbindungsabschnitts (6) in dem Halsbereich (14) der Aufnahmeöffnung (12) und die Elastomerbeschichtung (21) des zweiten Verbindungsabschnitts (7) in dem Dreiecksbereich (18) des Widerhakens (16) gegeben ist.

11. Strang (1) nach einem der vorhergehenden Ansprüche,
**dadurch gekennzeichnet, dass** er (1), abgesehen von den beiden Verbindungsabschnitten (6, 7), über seine Dicke genau drei Elastomerschichten (2, 3, 4) aufweist, so dass die zweite Elastomerschicht (3) eine mittlere Schicht ist, die mit einer Innenseite an die erste Elastomerschicht (2) und mit einer Außenseite an die dritte Elastomerschicht (4) angrenzt.

12. Strang (1) nach einem der vorhergehenden Ansprüche,
**dadurch gekennzeichnet, dass** die dritte Elastomerschicht (4) auf einer Außenseite Rippen (10) oder Noppen aufweist.

13. Strang (1') nach einem der vorhergehenden Ansprüche,
**dadurch gekennzeichnet, dass** er (1') ein Befestigungselement (30) aufweist, das, wenn er (1') zu einem Ring (24') geschlossen ist, zu dessen Befestigung an einem Gegenstand dient.

14. Strang (1, 1') nach einem der vorhergehenden Ansprüche,
**dadurch gekennzeichnet, dass** das erste und das zweite Ende miteinander verbunden sind und der Strang (1, 1') somit einen Ring (24, 24') bildet.

15. Strang (1, 1') nach einem der vorhergehenden Ansprüche,
**dadurch gekennzeichnet, dass** die erste Elastomerschicht (2) und die dritte Elastomerschicht (4) eine Härte von 15-40 Shore-A aufweisen.

## Claims

1. Strand of plastic (1) having a first and a second end, wherein the two ends can be connected to one another such that a ring (24) serving to enclose cables or lines is formed,
wherein the strand (1), over its thickness, has a first, inner elastomer layer (2) and a second elastomer layer (3) atop the first, wherein the elastomer of the first elastomer layer (2) is softer than the elastomer of the second elastomer layer (3),
wherein the first elastomer layer (2) has ribs (9) or studs on an inner side,
wherein the strand (1), over its thickness, has a third, outer elastomer layer (4), the elastomer of which is softer than the elastomer of the second elastomer layer (3),
wherein, for the purpose of connecting the ends, the first end of the strand (1) has a first elastomer connecting portion (6), which has a receiving opening (12), and the second end of the strand has a second elastomer connecting portion (7), which has a plug-in region (16) that can be inserted into the receiving opening (12)
and wherein an inner face of the receiving opening (12) is at partially provided by an elastomer coating (20) which is harder than the rest of the first connecting portion (6), and an outer face of the plug-in region (16) is at least partially provided by an elastomer coating (21) which is harder than the rest of the second connecting portion (7).

2. Strand (1) according to Claim 1,
**characterized in that** the receiving opening (12) and the plug-in region (16) are provided such that the insertion of the plug-in region (16) of the second connecting portion (7) into the receiving opening (12) of the first connecting portion (6) produces an audible noise.

3. Strand (1) according to Claim 1 or 2,
**characterized in that** the elastomer coating (20) of the receiving opening (12) and/or the elastomer coating (21) of the plug-in region (16) consists of thermoplastic vulcanisate (TPV).

4. Strand (1) according to one of the preceding claims,
**characterized in that** the elastomer coatings (20, 21) of the first and the second connecting portion (6, 7) have a thickness of 0.15 to 0.25 mm, preferably of 0.2 mm.

5. Strand (1) according to one of the preceding claims,
**characterized in that** the first elastomer layer (2) and the third elastomer layer (4) are made from cellular rubber, preferably from sponge rubber or foam rubber.

6. Strand (1) according to one of the preceding claims,
**characterized in that** the first elastomer layer (2) and the third elastomer layer (4) are made from the same material.

7. Strand (1) according to one of the preceding claims,
**characterized in that** the second elastomer layer (3) is made from soft rubber, preferably with a hardness of 60-90 Shore A.

8. Strand (1) according to one of the preceding claims,
**characterized in that** the second elastomer layer (3) and the two connecting portions (6, 7), except for the two elastomer coatings (20, 21), are made from the same material.

9. Strand (1) according to one of the preceding claims,
**characterized in that** the receiving opening (12) has an undercut edge (13) and the plug-in region is a complementary barb (16), the receiving opening (12) and the barb (16) each having mutually complementary neck regions (14, 17) and triangular regions (26, 18).

10. Strand (1) according to Claim 9,
**characterized in that** the elastomer coating (20) of the first connecting portion (6) is provided in the neck region (14) of the receiving opening (12) and the elastomer coating (21) of the second connecting portion (7) is provided in the triangular region (18) of the barb (16) .

11. Strand (1) according to one of the preceding claims,
**characterized in that**, over its thickness, except for the two connecting portions (6, 7), it (1) has exactly three elastomer layers (2, 3, 4), and therefore the second elastomer layer (3) is a middle layer, an inner side of which adjoins the first elastomer layer (2) and an outer side of which adjoins the third elastomer layer (4).

12. Strand (1) according to one of the preceding claims,
**characterized in that** the third elastomer layer (4) has ribs (10) or studs on an outer side.

13. Strand (1') according to one of the preceding claims,
**characterized in that** it (1') has a fastening element (30) which, when it (1') is closed to form a ring (24'), serves to fasten it to an object.

14. Strand (1, 1') according to one of the preceding claims,
**characterized in that** the first and the second end are connected to one another and the strand (1, 1') thus forms a ring (24, 24').

15. Strand (1, 1') according to one of the preceding claims,
**characterized in that** the first elastomer layer (2) and the third elastomer layer (4) have a hardness of 15-40 Shore A.

## Revendications

1. Brin en matière plastique (1) avec une première et une deuxième extrémité, les deux extrémités pouvant être reliées l'une à l'autre de manière à former un anneau (24) servant à entourer des câbles ou des lignes,
le brin (1) présentant, sur son épaisseur, une première couche élastomère intérieure (2) et une deuxième couche élastomère (3) superposée, l'élastomère de la première couche élastomère (2) étant plus souple que l'élastomère de la deuxième couche élastomère (3),
la première couche élastomère (2) présentant des nervures (9) ou des picots sur un côté intérieur,
le brin (1) présentant sur son épaisseur une troisième couche élastomère extérieure (4) dont l'élastomère est plus souple que l'élastomère de la deuxième couche élastomère (3),
le brin (1) présentant, pour relier les extrémités, à la première extrémité, une première section de liaison élastomère (6) qui possède une ouverture de réception (12) et, à la deuxième extrémité, une deuxième section de liaison élastomère (7) qui possède une zone d'enfichage (16) pouvant être insérée dans l'ouverture de réception (12),
et une surface intérieure de l'ouverture de réception (12) étant au moins partiellement donnée par un revêtement élastomère (20) plus dur en comparaison du reste de la première section de liaison (6) et une surface extérieure de la zone d'enfichage (16) étant au moins partiellement donnée par un revêtement élastomère (21) plus dur en comparaison du reste de la deuxième section de liaison (7).

2. Brin (1) selon la revendication 1, **caractérisé en ce que** l'ouverture de réception (12) et la zone d'enfichage (16) sont telles qu'un bruit audible est produit lors de l'insertion de la zone d'enfichage (16) de la deuxième section de liaison (7) dans l'ouverture de réception (12) de la première section de liaison (6).

3. Brin (1) selon la revendication 1 ou 2, **caractérisé en ce que** le revêtement élastomère (20) de l'ouverture de réception (12) et/ou le revêtement élastomère (21) de la zone d'enfichage (16) est constitué de vulcanisat thermoplastique (TPV).

4. Brin (1) selon l'une quelconque des revendications précédentes, **caractérisé en ce que** les revêtements élastomères (20, 21) des première et deuxième sections de liaison (6, 7) présentent une épaisseur de 0,15 à 0,25 mm, de préférence de 0,2 mm.

5. Brin (1) selon l'une quelconque des revendications précédentes, **caractérisé en ce que** la première couche élastomère (2) et la troisième couche élastomère (4) sont fabriquées à partir de caoutchouc poreux, de préférence de caoutchouc mousse ou de caoutchouc expansé.

6. Brin (1) selon l'une quelconque des revendications précédentes, **caractérisé en ce que** la première couche élastomère (2) et la troisième couche élastomère (4) sont fabriquées dans le même matériau.

7. Brin (1) selon l'une quelconque des revendications précédentes, **caractérisé en ce que** la deuxième couche élastomère (3) est fabriquée en caoutchouc souple, de préférence d'une dureté de 60 à 90 Shore A.

8. Brin (1) selon l'une quelconque des revendications précédentes, **caractérisé en ce que** la deuxième couche élastomère (3) et les deux sections de liaison (6, 7) sont fabriquées dans le même matériau, à l'exception des deux revêtements élastomères (20, 21).

9. Brin (1) selon l'une quelconque des revendications précédentes, **caractérisé en ce que** l'ouverture de réception (12) présente un bord en contre-dépouille (13) et la zone d'enfichage est une barbe (16) complémentaire de celle-ci, l'ouverture de réception (12) et la barbe (16) ayant respectivement des zones de col (14, 17) et des zones triangulaires (26, 18) complémentaires l'une de l'autre.

10. Brin (1) selon la revendication 9, **caractérisé en ce que** le revêtement élastomère (20) de la première section de liaison (6) est donné dans la zone de col (14) de l'ouverture de réception (12) et le revêtement élastomère (21) de la deuxième section de liaison (7) est donné dans la zone triangulaire (18) de la barbe (16).

11. Brin (1) selon l'une quelconque des revendications précédentes, **caractérisé en ce qu'**il (1) présente, à l'exception des deux sections de liaison (6, 7), exactement trois couches élastomères (2, 3, 4) sur son épaisseur, de telle sorte que la deuxième couche élastomère (3) est une couche centrale qui est adjacente à la première couche élastomère (2) par un côté intérieur et à la troisième couche élastomère (4) par un côté extérieur.

12. Brin (1) selon l'une quelconque des revendications précédentes, **caractérisé en ce que** la troisième couche élastomère (4) présente des nervures (10) ou des picots sur un côté extérieur.

13. Brin (1') selon l'une quelconque des revendications précédentes, **caractérisé en ce qu'**il (1') présente un élément de fixation (30) qui, lorsqu'il (1') est fermé en un anneau (24'), sert à le fixer à un objet.

14. Brin (1, 1') selon l'une quelconque des revendications précédentes, **caractérisé en ce que** les première et deuxième extrémités sont reliées l'une à l'autre, et le brin (1, 1') forme ainsi un anneau (24, 24').

15. Brin (1, 1') selon l'une quelconque des revendications précédentes, **caractérisé en ce que** la première couche élastomère (2) et la troisième couche élastomère (4) présentent une dureté de 15 à 40 Shore A.
